# EUROPEAN PATENT APPLICATION

(11) **EP 3 189 721 A1**
(43) Date of publication of application: **12.07.2017**
(21) Application number: 17150914.4
(22) Date of filing: 10.01.2017
(51) Int. Cl.: A01D 34/535

(54) **IMPROVED CUTTING DEVICE FOR FARMING EQUIPMENT**

(30) Priority: 11.01.2016 IT UB20169891
(71) Applicant: Energreen S.r.l., 36026 Cagnano di Pojana Maggiore (VI) (IT)
(72) Inventor: FRARON, Ivo, 36040 Orgiano (VI) (IT)
(74) Representative: Marchioro, Paolo

(57) **Abstract**

A cutting device (1) for farming equipment comprising a body (2) with a substantially plate-like development on which there are identified a first section (21) provided with connection means (3) for fixing to the farming equipment and a second section (22), opposite to the first section (21), provided with cutting elements (4) on the two mutually opposite lateral edges (22a, 22b). The device provides for that a surface (5) of the plate-like body (2), at least at the level of the second section (22), has a concave-shaped profile developing according to a median direction (M) of the plate-like body (2).

## Description

The invention regards a cutting device for farming equipment for use in green areas maintenance or farming industry.

Cutting devices for farming equipment suitable to be connected, freely and usually in pairs, on rotary rollers of such farming equipment with the aim of cutting grass, shrubs and vegetation on the roadside, are known. In particular, such farming equipment can be defined, for example, as cutting units connected to tractors or trucks arms.

As regards prior art cutting devices, each one of them comprises a body with substantially plate-like development, in which there is identified a first section provided with connection means, for the substantially free-type fixing to the aforementioned rotary roller, and a second section, opposite to the first, having cutting elements with inclined cutting surfaces at both lateral edges.

A first drawback of the aforementioned cutting devices lies in the fact that they have a cutting efficiency limited over time. In particular, as the cutting operations progress over time, the cutting elements progressively deteriorate and wear out thus losing their sharpness.

A further disadvantage of the aforementioned prior art cutting devices lies in the fact that, as previously mentioned, they are coupled to said roller, usually in pairs, so that during the rotation of the latter, each cutting device is directed so that the cutting elements defined at a first one of the two lateral edges precede the cutting elements provided on the second one of the two lateral edges, arranged on the opposite side.

Disadvantageously, during the aforementioned rotation, it often occurs that such cutting devices, being freely connected to the roller, take a non-optimal direction with respect to the vegetable material to be cut, essentially due to the thrust effect imparted by the air on the body of the aforementioned cutting devices. Thus, the shrubs or grass are not cut appropriately.

The present invention aims to overcome all the aforementioned drawbacks.

In particular, one of the objects of the invention is to provide a cutting device for farming equipment with long-lasting cutting efficiency.

In detail, an object of the invention is to provide a cutting device for farming equipment that does not require grinding and other maintenance operations to maintain the cutting efficiency thereof over a long period of time.

Another object of the invention is to provide a cutting device for farming equipment capable of maintaining a substantially radial position with respect to the aforementioned roller even when performing the cutting operations.

The aforementioned objects are attained by providing the cutting device according to the main claim.

In particular, the cutting device of the invention is characterised by providing for a surface, at least at the cutting elements, with concave-shaped profile according to a median direction of the cutting device itself.

Further characteristics of the cutting device of the invention are outlined in the dependent claims.

The aforementioned objects and advantages described hereinafter, shall be outlined in the description of a preferred embodiment of the invention, provided solely by way of non-limiting example, with reference to the following attached drawings, wherein:
- fig. 1 shows an axonometric view of the cutting device of the invention;
- fig. 2 shows a front view of the cutting device of the invention;
- fig. 3 shows a lateral view of the cutting device of the invention;
- fig. 4 shows the sectional view of the cutting device of the invention according to the sectional plane III-III represented in fig. 3;
- fig. 5 shows the coupling of two cutting devices of the invention.

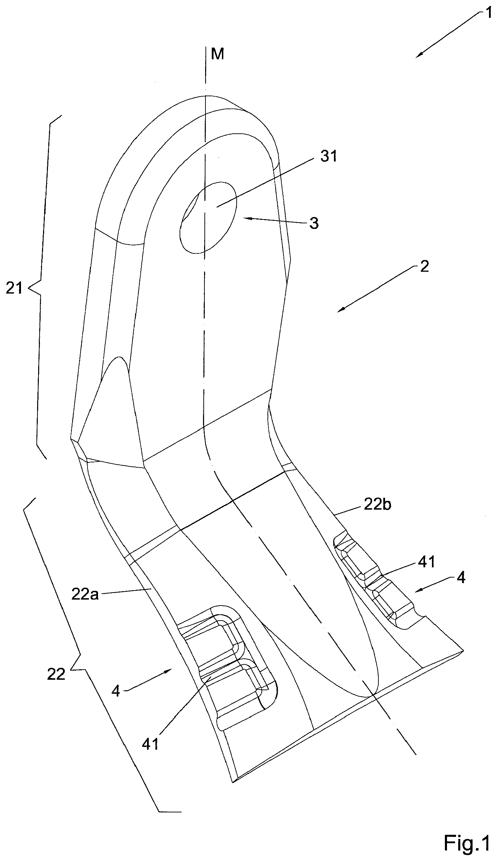

The cutting device of the invention for farming equipment, according to a preferred embodiment, is represented in figs. 1 to 4 where it is indicated in its entirety with **1**.

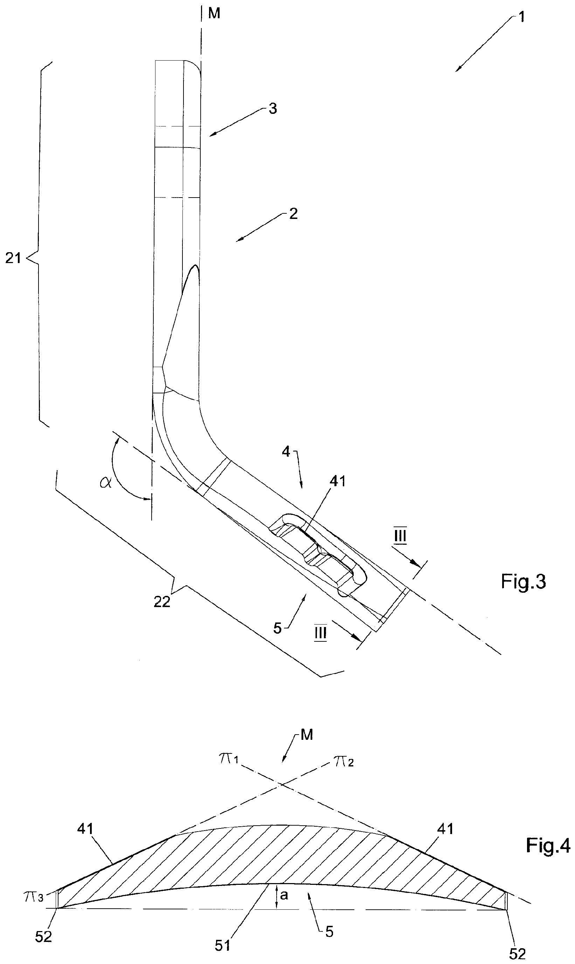

As observable in fig. 1, the cutting device **1** comprises a body **2** with substantially plate-like development. Preferably, the plate-like body **2** has a curved profile according to a sectional plane comprising the development line along the median direction **M** of the plate-like body **2** itself. In particular, as observable in fig. 3, the curvature of the aforementioned curved profile is defined in the central position of the plate-like body **2**. Even more in detail, the angle **α** of said curvature is comprised between 110° and 140°, preferably it is of 128°.

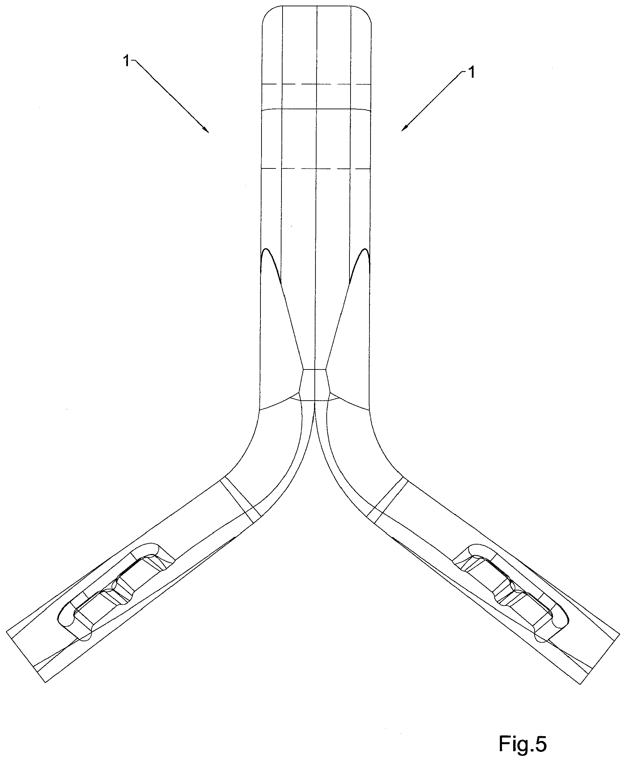

The specific characteristics described above for the preferred embodiment of the cutting device **1** of the invention enable facilitating the coupling of two of the aforementioned mutually adjacent cutting devices **1**, as represented in fig. 5, maintaining the cutting efficiency thereof high.

However, according to alternative embodiments of the invention, it cannot be ruled out that the curvature be defined in a position different from the central one, or that the angle of curvature be selected outside the range indicated above.

Furthermore, according to alternative embodiments, it cannot be ruled out that such plate-like body **2** be straight-shaped according to a sectional plane comprising the aforementioned median direction **M**.

In any case, the plate-like body **2** of the cutting device **1** of the invention provides for that on a first section **21** thereof there be defined connection means **3** for freely fixing the cutting device **1** to the farming equipment, not represented in the figures.

In detail, preferably but not necessarily, such connection means **3** comprise an eyelet **31** which enables fixing the cutting device **1** on suitable coupling means present in the rotary roller of the specific farming means.

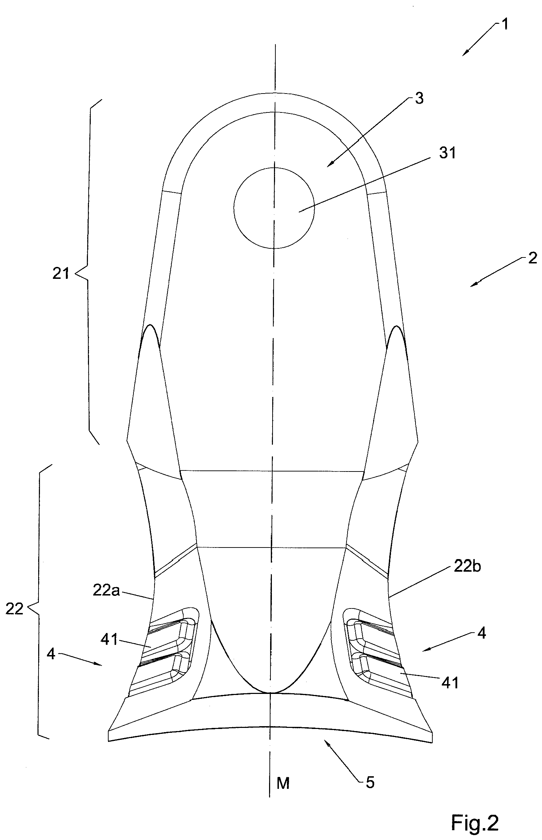

Instead as regards the second section **22**, opposite to the first section **21**, of the cutting device **1** of the invention, it is provided with cutting elements **4**. In particular, as observable in fig. 2, there is provided for a cutting element **4** for each of the two mutually opposite lateral edges **22a** and **22b**.

As represented in fig. 4, the aforementioned cutting elements 4 have inclined cutting surfaces **41** lying on two mutually incident planes **π₁** and **π₂** in a central position with respect to said body, substantially at the median direction **M**. Furthermore, preferably but not necessarily, the lateral edges **22a** and **22b** on which the cutting elements **4** are defined have a curved profile, as observable in fig. 2.

According to the invention, the cutting device **1** provides for that a surface **5** of the plate-like body **2**, at least at the second section **22**, has a concave-shaped profile extending according to the aforementioned median direction **M** of the plate-like body **2** itself, as represented in fig. 4.

Even more precisely, with reference to the representation of fig. 2, such concave-shaped profile of the surface **5**, defined at the level of at least the second section **22**, has the maximum point thereof substantially lying along the aforementioned median direction **M**, while each of the two lateral minimum points substantially lies along one of the aforementioned two lateral edges **22a** and **22b**.

In particular, as observable still in fig. 4, la concavity of such surface **5** with concave-shaped profile is directed towards the line of incidence of the two planes **π₁** and **π₂** on which the cutting surfaces **41** of the aforementioned cutting elements **4** lie.

Such characteristic enables obtaining two major advantages. First and foremost, it enables the laterally arranged cutting elements **4** to maintain a limited thickness and thus a given level of sharpness even with the progressive deterioration and wear out thereof due to the repeated utilisation.

As a matter of fact, given that such surface **5** of the plate-like body **2** has the aforementioned concave-shaped profile, even when the cutting elements **4** deteriorate, they still maintain a substantially constant thickness, contrary to what occurs with the prior art cutting devices.

Furthermore, a second advantage obtained by such particular concave conformation of the surface **5** lies in the fact that the cutting device **1**, in its entirety, has a more aerodynamic shape with respect to the prior art cutting devices. Thus, this enables obtaining an effect of greater ventilation during the rotation of the roller.

Thus, there is obtained the advantage of an optimal angle of impact between the cutting elements **4** of the aforementioned cutting devices **1** of the invention and the grass or shrub to be cut.

According to the preferred embodiment of the cutting device **1** of the invention, the concave-shaped profile of the surface **5** is preferably but not necessarily symmetrically defined along the aforementioned median direction **M**. Furthermore, still according to the preferred embodiment of the invention described and represented herein, the height **a** between the central part **51** of the surface **5** with concave-shaped profile, in which the aforementioned maximum point is defined, and the plane **π₃** comprising the lateral edges **52** of the surface **5** itself, in which the two minimum points of the aforementioned concave profile are identified, as observable in fig. 4, has a value comprised between 2 and 6 mm.

Lastly, the cutting device of the invention is preferably but not necessarily obtained by forging.

However, according to an alternative embodiment of the invention, it cannot be ruled out that the cutting device be obtained by moulding.

Thus, in the light of the above, the cutting device **1** of the invention attains all the pre-set objects.

In particular, the object of providing a cutting device for farming equipment with long-lasting cutting efficiency is attained.

In detail, the object of providing a cutting device for farming equipment that does not require grinding and other maintenance operations to maintain the cutting efficiency thereof over a long period of time, is attained.

Lastly, the object of providing a cutting device for farming equipment capable of maintaining a substantially radial position with respect to the aforementioned roller even when performing the cutting operations, is attained.

## Claims

1. Cutting device (1) for farming equipment comprising a body (2) with a substantially plate-like development on which there are identified a first section (21) provided with connection means (3) for fixing to said farming equipment and a second section (22), opposite to said first section (21), provided with cutting elements (4) on the two lateral edges (22a, 22b) opposite to each other, **characterised in that** a surface (5) of said plate-like body (2), has a concave-shaped profile which develops according to a median direction (M) of said plate-like body (2), at least at the level of said second section (22).

2. Cutting device (1) according to claim 1, **characterised in that** said concave-shaped profile is symmetrically defined on said surface with concave-shaped profile (5) of said plate-like body (2) along said median direction (M).

3. Cutting device (1) according to any one of the preceding claims, **characterised in that** the height (a) between the central part (51) of said surface with concave-shaped profile (5) and the plane (π₃) comprising the lateral edges (52) of said surface with a concave-shaped profile (5) has a value comprised between 2 and 6 mm.

4. Cutting device (1) according to any one of the preceding claims, **characterised in that** said cutting elements (4) have inclined cutting surfaces (41) lying on two planes (π₁, π₂) substantially mutually incident along said median direction (M) of said plate-like body (2), said concavity of said surface with concave-shaped profile (5) being directed towards said line of incidence of said two planes (π₁, π₂).

5. Cutting device (1) according to any one of the preceding claims, **characterised in that** said plate-like body (2) has a straight profile according to a sectional plane comprising said median direction (M).

6. Cutting device (1) according to any one of claims 1 to 4, **characterised in that** said plate-like body (2) has a curved profile according to a sectional plane comprising said median direction (M).

7. Cutting device (1) according to claim 6, **characterised in that** the curvature of said curved profile is defined in a central position of said plate-like body (2).

8. Cutting device (1) according to claim 7, **characterised in that** the angle (α) of said curvature is comprised between 110° and 140°, preferably it is of 128°.

9. Cutting device (1) according to any one of the preceding claims, **characterised in that** said connection means (3) comprise an eyelet (31).

10. Cutting device (1) according to any one of the preceding claims, **characterised in that** said lateral edges (22a, 22b) on which said cutting elements (4) are defined have a concave profile.

11. Cutting device (1) according to any one of the preceding claims, **characterised in that** said plate-like body (2) is obtained by forging.
